# EUROPEAN PATENT SPECIFICATION

(11) **EP 4 567 650 B1**
(45) Date of publication and mention of the grant of the patent: **25.11.2026**
(21) Application number: 24217255.9
(22) Date of filing: 03.12.2024
(51) Int. Cl.: G06F 21/57, G06F 21/44

(54) **SYSTEM AND METHOD FOR REGULATING ACCESS TO SECURE FUNCTIONS**
SYSTEM UND VERFAHREN ZUR REGELUNG DES ZUGANGS ZU SICHEREN FUNKTIONEN
SYSTÈME ET PROCÉDÉ DE RÉGULATION D'ACCÈS À DES FONCTIONS SÉCURISÉES

(30) Priority: 06.12.2023 IN 202341083268
(43) Date of publication of application: 11.06.2025
(73) Proprietor: NXP B.V., 5656 AG Eindhoven (NL)
(72) Inventor: Yadava, Gulab Chandra, 5656 AG Eindhoven (NL); Kulkarni, Giten, 5656 AG Eindhoven (NL)
(74) Representative: Krott, Michel

(56) References cited:
- US-A1- 2021 390 185
- US-A1- 2022 027 474
- US-A1- 2023 229 779

## Description

### FIELD OF USE

The present disclosure relates generally to electronic circuits, and, more particularly, to a system and method for regulating access to secure functions.

### BACKGROUND

An electronic device includes a host and a secure element. The host authorizes secure applications in the secure element to establish trust with the secure element at each reboot cycle of the device. An authorization state indicative of the execution of the authorization for the secure applications is thus persistently stored in the secure element at each reboot cycle. In an event that the security of the device is compromised due to an attack by a malicious operating system (OS), the malicious OS can gain access to the secure applications as the authorization state associated with a previous reboot cycle indicates that the secure application is authorized. Thus, unauthorized extraction of sensitive data and execution of unauthorized operations within the secure element occur.

US 2022/0027474 (A1) discloses one or more systems, one or more methods, and/or one or more processes which: may determine that a platform reset signal from a processor of an information handling system has been asserted; may determine that a power conservation state from the processor was not asserted within an amount of time; may determine that an operating system restart occurred; may notify a hardware root of trust device to authenticate information handling system firmware; may assert a resume reset signal to the processor; may authenticate the information handling system firmware; may de-assert a power OK signal to the processor; may remove power from the processor; may determine that the resume reset signal to the processor is de-asserted and that the processor is out of the power conservation state; and may provide power to the processor.

### BRIEF DESCRIPTION OF THE DRAWINGS

The following detailed description of the embodiments of the present disclosure will be better understood when read in conjunction with the appended drawings. The present disclosure is illustrated by way of example, and not limited by the accompanying figures, in which like references indicate similar elements.
FIG. 1 is a schematic block diagram of an electronic device that includes an integrated circuit (IC), in accordance with an embodiment of the present disclosure;
FIGS. 2A-2B illustrate a reboot database stored in a secure memory of the IC of FIG. 1, in accordance with an embodiment of the present disclosure;
FIG. 3 illustrates an authorization database stored in a secure memory of the IC of FIG. 1, in accordance with an embodiment of the present disclosure;
FIG. 4 represents a process flow diagram that illustrates access regulation of a host of FIG. 1 to a plurality of secure functions of the IC of FIG. 1, in accordance with an embodiment of the present disclosure; and
FIGS. 5A-5C, collectively, represents a flowchart that illustrates an access regulation method for regulating access to secure functions of the IC of FIG. 1, in accordance with an embodiment of the present disclosure.

### DETAILED DESCRIPTION

### Overview:

In an electronic device, an authorization between a host and a secure element is a fundamental security mechanism that is executed to protect a plurality of secure functions and sensitive data of the secure element. The authorization ensures safeguarding the secure functions against unauthorized access thereby reducing potential security breaches. The secure element stores an authorization state of the host based on the authorization between the host and the secure element. The security of the electronic device thus relies on the authorization between the host and the secure element. However, the authorization may be bypassed by malicious software in the host or any other means. This may lead to unauthorized access to the plurality of secure functions and sensitive data as in conventional devices, the pre-existing authorization state remains unchanged.

Various embodiments of the present disclosure disclose an integrated circuit (IC). The IC may include a detector, a secure memory, and a control circuit. The detector may be coupled to a host and the secure memory. Further, the detector may be configured to receive a reset alert signal from the host. Based on a state of the reset alert signal, the detector may be further configured to detect a reboot state of the host. The detector may be further configured to generate a reboot flag that indicates the reboot state of the host. The secure memory may be configured to store the reboot flag. The control circuit may be coupled to the host, the secure memory, and the detector. The control circuit may be configured to receive an access request from the host to access a plurality of secure functions of the IC. The control circuit may be further configured to determine a status of the reboot flag based on the reception of the access request. The status of the reboot flag may be indicative of one of (i) the reset operation of the processor when the reboot flag is set (*e.g.,* the reboot flag is set to one), and (ii) a normal operation of the processor when the reboot flag is reset (*e.g.,* the reboot flag is set to zero). Additionally, the control circuit may be further configured to determine an authorization state of the host indicative of an authorization between the control circuit and the host. Based on the status of the reboot flag and the authorization state, the control circuit may be further configured to regulate access of the host to the plurality of secure functions.

The detector and the control circuit add an extra security layer to the electronic device. The detector may detect the reboot state of the processor based on the state of the reset alert signal. In the event of an attack by a malicious software that gains control of the host, the control circuit restricts access to such software based on the determination of absence of the authorization or failure of the authorization after the reset operation of the host. Thus, the malicious software is unable to access the secure functions of the device and a safety of the electronic device remains uncompromised. For genuine applications of the host trying to gain access to the plurality of secure applications, the authorization between the control circuit and the host serves as a deterministic factor to grant access to the host to the plurality of secure applications after the reset operation of the host. The control circuit may grant access to the plurality of secure applications to at least one of the plurality of host applications when the authorization between the host and the control circuit after the reset operation of the host is successful. Similarly, for various remote internet of things (IoT) devices that may control secure operations, such devices may be authorized remotely after every reset operation to ensure that the security of the underlying secure operations remains uncompromised.

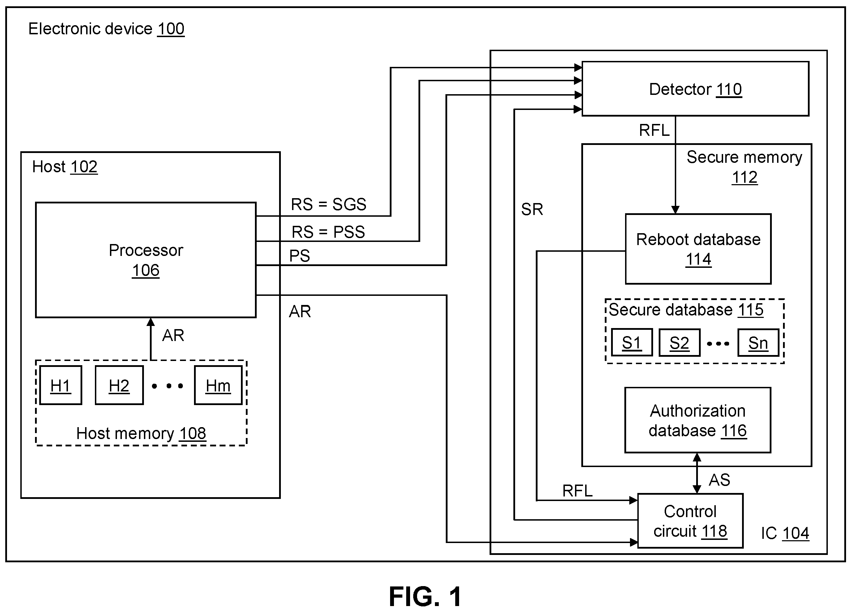

FIG. 1 is a schematic block diagram of an electronic device 100, in accordance with an embodiment of the present disclosure. Examples of the electronic device 100 may include mobile phones, smart watches, personal computers, smart wearables, internet of things (IoT) devices, automotive systems, or the like. The electronic device 100 may include a host 102 and an integrated circuit (IC) 104. The IC 104 may be a secure element and is hereinafter referred to as a "secure element 104".

### Host 102:

The host 102 may correspond to a main computer of the electronic device 100. The host 102 may be configured to execute a plurality of host applications H1-Hm. Examples of the plurality of host applications H1-Hm may include wallet applications, browser applications, media players, gaming applications, social media applications, content management applications, document management applications, or the like. Further, the host 102 may be configured to undergo one of (i) a normal operation and (ii) a reset operation. The normal operation of the host 102 may be indicative of the host 102 executing various functions. Examples of the various functions may include, but are not limited to, application execution, data processing, data storing, system maintenance, payment processing, or the like. The reset operation may be indicative of a reboot of the host 102 (*e.g.,* the host 102 is turned OFF and turned back ON). Further, the reset operation may be initiated to configure a software update in the electronic device 100, update firmware of the electronic device 100, system maintenance of the electronic device 100, or the like.

The host 102 may include a processor 106 and a host memory 108. The processor 106 may include suitable logic, circuitry, and/or interfaces that may be configured to perform one or more operations. For example, the processor 106 may be configured to initiate one of (i) the normal operation of the host 102 and (ii) the reset operation of the host 102, execute the plurality of host applications H1-Hm, and initiate an authorization between the host 102 and the secure element 104 upon the reset operation of the host 102. In an embodiment, the plurality of host applications H1-Hm may be configured to generate an access request AR by way of the processor 106 to access secure functions of the IC 104 as explained in the ongoing disclosure. The access request AR may be generated in response to a user request received from external circuitry to the host 102, or generated by the host 102 pertaining to security policy, application programming interface (API) calls, external events, time-based policies, or the like. The processor 106 may be a central processing unit (CPU), a graphics processing unit (GPU), a microcontroller, an application-specific integrated circuit (ASIC), or the like.

The processor 106 may be configured to generate a reset alert signal RS such that a state of the reset alert signal RS toggles during the reset operation. For example, the reset alert signal RS may toggle from an asserted state (*e.g.,* a logic high state) to a de-asserted state (*e.g.,* a logic low state) to indicate the reset operation. Alternatively, the reset alert signal RS may toggle from the asserted state to the de-asserted state to indicate the reset operation. Additionally, the reset alert signal RS may include at least one of a secure general-purpose input/output (GPIO) signal SGS and a pad supply signal PSS.

### Reset alert signal RS = pad supply signal PSS

The pad supply signal PSS may be indicative of an operational state *(e.g.,* ON state and OFF state) of the processor 106. In an embodiment, the pad supply signal PSS is asserted when the processor 106 is ON (*e.g.,* during the normal operation of the host 102). Alternatively, when the processor 106 is turned OFF during the reset operation of the host 102, the pad supply signal PSS is de-asserted. In other words, when the host 102 undergoes the reset operation, the state of the reset alert signal (*e.g.,* the pad supply signal PSS) toggles from the asserted state to the de-asserted state. In an embodiment, the pad supply signal PSS may be de-asserted to shut down a communication interface (not shown) between the host 102 (*e.g.,* the processor 106) and the secure element 104. Examples of the communication interface may include serial peripheral interface (SPI), inter-integrated circuit (I2C), universal asynchronous receiver/transmitter (UART), universal serial bus (USB), or the like.

### Reset alert signal RS = secure GPIO signal SGS

During the reset operation, when the processor 106 transitions from an OFF state to an ON state (*e*.*g*., turns ON), the processor 106 may be configured to execute an embedded software (not shown) stored in the host memory 108. Examples of the embedded software may include a basic input/output system (BIOS), a bootloader, a unified extensible firmware interface (UEFI) firmware, power on self-test (POST), device drivers, or the like. The processor 106 may further include a plurality of secure GPIO pins (not shown) configured to generate a secure GPIO signal SGS when the embedded software is executed. The embedded software may be designed with tamper-resistance features to prevent interference by any malicious software. In an embodiment, the processor 106 may be configured to assert the secure GPIO signal SGS via at least one of the plurality of secure GPIO pins such that the state of the secure GPIO signal SGS toggles when the processor 106 turns ON to execute the embedded software. Further, the state of the secure GPIO signal SGS may toggle such that the secure GPIO signal SGS may be de-asserted after the execution of the embedded software. In other words, during the reset operation, the processor 106 turns ON to execute the embedded software, thus, the state of the reset alert signal (*e.g.,* the secure GPIO signal SGS) toggles from the de-asserted state to the asserted state.

The host memory 108 may be coupled to the processor 106. The host memory 108 may include suitable logic, circuitry, and/or interfaces that may be configured to perform one or more operations. For example, the host memory 108 may be configured to store the plurality of host applications H1-Hm. Examples of the host memory 108 may include hard disk drives (HDDs), solid-state drives (SSDs), external hard drives, or the like.

### Secure element 104:

The secure element 104 may be a secure hardware utilized for various applications such as secure storage, digital identification, user authentication, secure messaging, payment authentication, or the like. The secure element 104 may be coupled to the host 102. Further, the secure element 104 may be configured to receive the reset alert signal RS from the host 102 (*e.g.,* the processor 106). The secure element 104 may be configured to determine whether the host 102 underwent a reset operation based on the state of the reset alert signal RS such that the state of the reset alert signal RS toggles during the reset operation of the host 102. Based on the determination that the host 102 underwent the reset operation, the secure element 104 may be further configured to regulate an access of the host 102 to a plurality of secure functions of the secure element 104. During a reboot of the secure element 104, firmware may be updated in the secure element 104, an irregular behavior of the secure element 104 may be corrected, or security policy changes may be implemented to the secure element 104. In an embodiment, the secure element 104 may be configured to reboot during the reset operation of the host 102. In another embodiment, the secure element 104 may reboot independently from the host 102 based on a user-requested reset or a request generated within the electronic device 100.

The secure element 104 may be further configured to receive a stable and consistent power supply PS to ensure standard operation of the secure element 104 during the reset operation. In an embodiment, the processor 106 provides the power supply PS. In another embodiment, the secure element 104 may be configured to receive the power supply PS from an external source (not shown) such that the processor 106 and the secure element 104 operate on independent power supplies. Examples of the power supply PS may include battery power supply, USB power supply, wireless power supply, or the like.

The secure element 104 may include a detector 110, a secure memory 112, and a control circuit 118.

### Detector 110:

The detector 110 may be coupled to the processor 106. The detector 110 may include suitable logic, circuitry, and/or interfaces that may be configured to perform one or more operations. For example, the detector 110 may be configured to receive the reset alert signal RS from the processor 106. Based on the state of the reset alert signal RS (*e.g.,* the reboot state), the detector 110 may be further configured to detect a reboot state of the processor 106 *(e.g.,* the host 102) and determine whether the host 102 underwent the reset operation. In an embodiment, a state of the pad supply signal PSS may be one of (i) asserted when the host 102 remains ON, and (ii) de-asserted when the host 102 remains OFF during the reset operation. Thus, the detector 110 may detect the reboot state of the pad supply signal PSS to be de-asserted thereby determining that the host 102 underwent the reset operation. In another embodiment, the detector 110 may be configured to receive the secure GPIO signal SGS. Based on the assertion of the secure GPIO signal SGS, the detector 110 may detect the reboot state of the host 102 and determine that the host 102 underwent the reset operation. In yet another embodiment, the detector 110 may be configured to receive the pad supply signal PSS and the secure GPIO signal SGS. Based on the assertion of the secure GPIO signal SGS and the de-assertion of the pad supply signal PSS, the detector 110 may detect the reboot state of the host 102. The reboot state of the processor 106 may be detected based on the pad supply signal PSS and the secure GPIO signal SGS to further improve the reliability and fault tolerance of the detector 110.

The detector 110 may be configured to generate a reboot flag RFL based on the reboot state of the host 102. In an embodiment, a status of the reboot flag RFL may be set *(e.g.,* set the reboot flag RFL to one) when the detector 110 determines that the host 102 underwent the reset operation based on the detected reboot state. The secure memory 112 may be configured to store the reboot flag RFL. The detector 110 may generate the reboot flag RFL based on at least one of the de-assertion of the pad supply signal PSS and the assertion of the secure GPIO signal SGS.

The detector 110 may be further configured to transition from a low power mode to a normal mode when the state of the reset alert signal RS toggles (*e.g.,* the reset alert signal RS may switch from an asserted state to a de-asserted state to indicate the reset operation). During the normal mode, the detector 110 may generate the reboot flag RFL indicative of the reboot state of the host 102. The detector 110 may be configured to actively monitor and detect the reset alert signal RS.

During the low power mode, the detector 110 may be further configured to operate in a low energy consumption state such that the efficiency of the detector 110 is improved and a battery life associated with the electronic device 100 may be extended. In an embodiment, the detector 110 may be configured to operate with reduced power and processing capability in the low energy consumption state such that the reset alert signal RS may be monitored at a reduced frequency. In another embodiment, the secure element 104 may include an interrupt circuit (not shown) that may be coupled to the processor 106. Additionally, the detector 110 may be configured to remain in a sleep state during the low power mode. Further, the interrupt circuit may be configured to receive the reset alert signal RS and generate an interrupt signal (not shown) when the state of the reset alert signal RS toggles. The interrupt circuit may be further configured to transmit the interrupt signal to the detector 110. Upon receiving the interrupt signal, the detector 110 may be further configured to transition from the low power mode to the normal mode.

### Secure memory 112:

The secure memory 112 may be coupled to the detector 110. The secure memory 112 may include a reboot database 114, a secure database 115, and an authorization database 116. The secure memory 112 may include suitable logic, circuitry, and/or interfaces that may be configured to perform one or more operations. For example, when the secure element 104 reboots, the secure memory 112 may retain data (*e.g.,* the reboot flag RFL associated with each of the plurality of host applications H1-Hm) persistently to ensure data integrity. The secure memory 112 may be a non-volatile memory or a storage-class memory. Examples of the secure memory 112 may include flash memory, solid-state drives (SSD), non-volatile random-access memory (NVRAM), magnetoresistive random-access memory (MRAM), phase change memory (PCM), battery-backed static random-access memory (SRAM), resistive random-access memory (ReRAM), or the like.

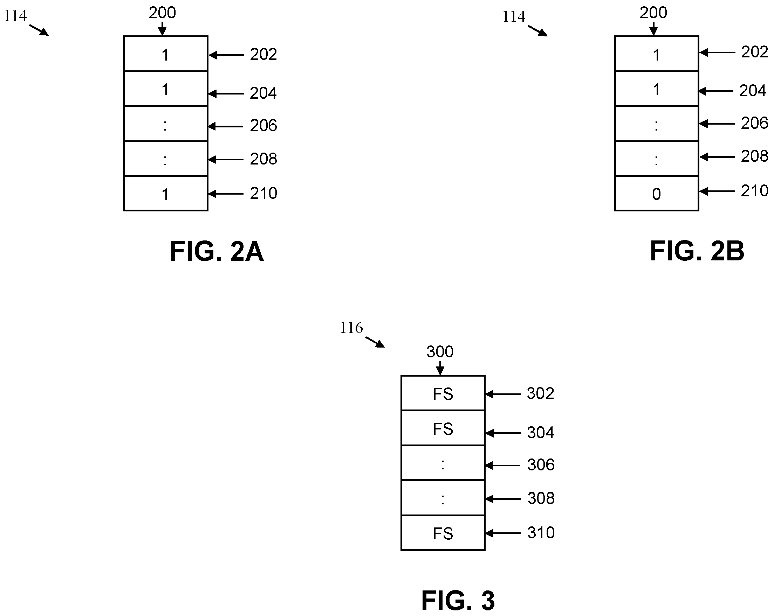

The secure memory 112 may store the reboot flag RFL (shown later in FIGS. 2A-2B) associated with each of the plurality of host applications H1-Hm in the reboot database 114 as each of the plurality of secure functions associated with at least one of the plurality of secure applications S1-Sn may be invoked at different time instances. Examples of the reboot database 114 may include relational database, extensible markup language (XML) database, in-memory database, blockchain database, or the like.

The secure memory 112 may be further configured to store a plurality of secure applications S1-Sn in the secure database 115. In one embodiment, installation of the plurality of secure applications S1-Sn in the secure memory 112 may be initiated by the processor 106. Examples of the secure database 115 may include library database, software repository, application library, or the like. Examples of the plurality of secure applications S1-Sn may include authentication applications, payment applications, password managing applications, IoT applications, or the like. The plurality of secure applications S1-Sn may be associated with at least one of the plurality of secure functions. In an example, a first secure application S1 may be associated with one or more of the plurality of secure functions. The plurality of secure functions may be related to specific tasks or operations executed on the secure element 104. Examples of the plurality of secure functions may include device authorization, payment processing, identity verification, secure messaging, cryptographic operation, access control, digital signature, tokenization, or the like.

The secure memory 112 may be further configured to store a plurality of general applications (not shown) in the secure database 115. Examples of the plurality of general-purpose applications may include messaging applications, device management applications, cloud storage applications, health and fitness applications, or the like. The plurality of general-purpose applications may be associated with at least one of a plurality of general-purpose functions. In an example, a first general application may be associated with one or more of the plurality of general-purpose functions. The plurality of secure functions may be related to specific tasks or operations executed on the secure element 104 and may be unrelated to the sensitive data. In an embodiment, the plurality of general applications may be stored outside the secure memory 112. Examples of the plurality of general-purpose functions may include device information, error logging, device updates, power management, timekeeping, or the like.

Each of the plurality of secure applications S1-Sn may be linked with at least one of the plurality of host applications H1-Hm. In a scenario, the first host application H1 is a wallet application stored in the host memory 108. Thus, the secure memory 112 may include a first plurality of secure applications that may be linked to the wallet application. Additionally, a plurality of secure functions may be associated with the first plurality of secure applications. In an example, when a credit card payment is initiated in the wallet application (*e*.*g*., the first host application H1), the secure function (*e.g.,* a first secure function) associated with at least one of the first plurality of secure applications may be accessed via the processor 106 to complete the payment. Alternatively, when a debit card payment is initiated in the wallet application (*e*.*g*., the first host application H1), the secure function (*e.g.,* a second secure function) associated with at least one of the first plurality of secure applications may be accessed via the processor 106 to successfully complete the payment.

The secure memory 112 may be further configured to persistently store an authorization state AS (shown later in FIGS. 2A-2B) associated with each of the plurality of the host applications H1-Hm in the authorization database 116. The authorization state AS may be indicative of the authorization between the control circuit 118 and the processor 106.

### Control circuit 118:

The control circuit 118 may be coupled to the processor 106. The control circuit 118 may be further coupled to the detector 110 and the secure memory 112. The processor 106 may be configured to transmit the access request AR to the control circuit 118. The control circuit 118 may include suitable logic, circuitry, and/or interfaces that may be configured to perform one or more operations. For example, the control circuit 118 may be configured to receive the access request AR from the processor 106. The control circuit 118 may be further configured to generate a status request SR based on the received access request AR. The status request SR may be generated in response to the access request AR received from the processor 106. In an embodiment, the status request SR may be indicative of a request to receive the reboot flag RFL associated with at least one of the plurality of host applications H1-Hm. Further, the control circuit 118 may be configured to transmit the status request SR to the detector 110. Based on the status request SR, the secure memory 112 may be further configured to provide the reboot flag RFL associated with at least one of the plurality of host applications H1-Hm to the control circuit 118. The reboot flag RFL associated with at least one of the plurality of host applications H1-Hm may be reset by the secure memory 112 when the associated reboot flag RFL is retrieved by the control circuit 118.

In another embodiment, the control circuit 118 may receive the access request AR from at least one of the plurality of host applications H1-Hm to access at least one of the plurality of secure functions during the reset operation of the host 102. The control circuit 118 may thus generate the status request SR based on the received access request AR and transmit the status request SR to the detector 110. Upon receiving the status request SR, the detector 110 may detect the reboot state of the host 102 when the state of the reset alert signal RS toggles. Further, the detector 110 may be configured to provide the reboot flag RFL to the control circuit 118 when the reboot state indicates that the host 102 underwent the reset operation. The control circuit 118 may thus determine the status of the reboot flag RFL based on the reception of the access request AR.

The control circuit 118 may determine the authorization state AS of the host 102 (*e.g.,* each of the plurality of the host applications H1-Hm) and store the authorization state AS in the authorization database 116. Examples of the control circuit 118 may include a microprocessor, a control logic, a central processing unit (CPU), or the like. In an embodiment, the authorization state AS may be associated with the authorization between the control circuit 118 and the processor 106 (*e.g.,* the host 102). In one embodiment, the host 102 may be configured to initiate the authorization after the reset operation is completed and upon generation of the access request AR. In another embodiment, the host 102 may be configured to initiate the authorization during the reset operation. Examples of the authorization may be at least one of a group consisting of trusted binding, multi-factor authorization, token-based authorization, certificate-based authorization, blockchain-based authorization, behavioral-based authorization, or the like. The authorization state AS may be one of (i) a first state indicative of absence of the authorization or failure of the authorization between the control circuit 118 and the processor 106 after the reset operation, and (ii) a second state indicative of a successful authorization between the control circuit 118 and the processor 106 after the reset operation.

The control circuit 118 may be further configured to regulate access of the host 102 (e.g., at least one of the plurality of host applications H1-Hm) to at least one of the plurality of secure functions based on the status of the reboot flag RFL and the authorization state AS.

### Restricting access after reset operation:

In one scenario, the host 102 initiates the authorization, and the authorization state AS is indicative of a successful authorization. A reset operation of the host 102 occurs thereafter. At least one of the plurality of host applications H1-Hm generates the access request AR after the reset operation. The control circuit 118 may thus determine the status of the reboot flag RFL based on the reception of the access request AR. The status of the reboot flag RFL may indicate the reset operation of the host 102 as the reboot flag RFL is set (*e.g.,* the reboot flag RFL is set to one).

The control circuit 118 may determine that the authorization state AS indicates the successful authorization between the control circuit 118 and the processor 106 (*e.g.,* the host 102) before an occurrence of the reset operation of the host 102 and the status of the reboot flag RFL is indicative of the reset operation of the host 102. Thus, the control circuit 118 may determine absence of the authorization between the control circuit 118 and the processor 106 (*e.g.,* the host 102) after the occurrence of the reset operation of the host 102. The control circuit 118 may thus update the authorization state AS to the first state such that the first state indicates the absence of the authorization after the reset operation of the host 102. Further, the control circuit 118 may restrict access of at least one of the plurality of host applications H1-Hm to at least one of the plurality of secure functions to prevent any unauthorized access. In an embodiment, the control circuit 118 may be further configured to transmit a lockout signal (not shown) to the processor 106 such that based on the lockout signal the processor 106 may detect that the access to the plurality of secure functions is restricted. In an embodiment, the authorization state AS may include a first time stamp (not shown). The first time stamp may indicate a time of the authorization between the control circuit 118 and the processor 106. Additionally, the reboot flag RFL may include a second time stamp (not shown). The second time stamp may indicate the time of the reset operation of the host 102. Further, based on the first time stamp and the second time stamp, the control circuit 118 may be configured to determine the time of authorization. In an example, when the first time stamp of the authorization state AS is earlier than the second time stamp of reception of the reboot flag RFL, the control circuit 118 may determine that the authorization state AS corresponds to an authorization between the host 102 and the control circuit 118 before the occurrence of the reset operation in the aforementioned scenario. Thus, the authorization state AS may be indicative of a successful authorization between the control circuit 118 and the processor 106 before the reset operation. Further, the control circuit 118 may update the authorization state AS to the first state and restricts the host 102 from accessing the plurality of secure functions.

### Granting access after restricting access upon reset operation:

When the control circuit 118 restricts access of at least one of the plurality of host applications H1-Hm to at least one of the plurality of secure functions, the host 102 may be further configured to initiate the authorization with the control circuit 118. Further, when the authorization between the control circuit 118 and the processor 106 is successful after the reset operation of the host 102, the control circuit 118 circuit may be further configured to update the authorization state AS to the second state. Further, based on the authorization state AS being at the second state, the control circuit 118 may be further configured to grant at least one of the plurality of host applications H1-Hm access to the plurality of secure functions and the plurality of general-purpose functions. In the above example, upon successful authorization, an updated time of the first time stamp is later than the time of the second time stamp. Further, the authorization state AS is updated to the second state. Thus, the control circuit 118 grants the host 102 access to the plurality of secure functions.

### Restricting access after failure of authorization upon reset operation:

In another scenario, the authorization between the host 102 and the control circuit 118 after the reset operation is a failure. The authorization may fail due to incorrect credentials, communication protocol mismatch, clock synchronization issue, memory corruption, or the like. Thus, the control circuit 118 may determine the failure of the authorization between the control circuit 118 and the processor 106 after the occurrence of the reset operation of the host 102. The control circuit 118 may thus update the authorization state AS to the first state such that the first state indicates the failure of the authorization after the reset operation of the host 102. Further, the control circuit 118 may restrict access of at least one of the plurality of host applications H1-Hm to at least one of the plurality of secure functions to prevent any unauthorized access. Additional troubleshooting steps may be required when the authorization between the control circuit 118 and the processor 106 is a failure. Examples of the additional troubleshooting steps may include, software updates, factory reset, service center repairs, or the like. Alternatively, the processor 106 may re-initiate an authorization once the authorization fails.

In yet another scenario, when the status of the reboot flag RFL is indicative of the normal operation of the host 102 (*e.g.,* the status of the reboot flag RFL is reset), the control circuit 118 may be further configured to maintain the authorization state AS based on the authorization. In an example, when the authorization is successful, the authorization state AS is updated to the second state. In another example, when the authorization has failed, the authorization state AS is updated to the first state. Further, the control circuit 118 may regulate the access of the plurality of host applications H1-Hm to at least one of the plurality of secure functions and the plurality of general-purpose functions based on the authorization state AS.

### In operation:

The processor 106 may initiate the installation of one of the plurality of secure applications S1-Sn, such as the first secure application S1, in the secure memory 112. The first secure application S1 may be an applet of at least one of the plurality of host applications H1-Hm. For example, when the first host application H1 is a wallet application stored in the host memory 108, a first plurality of applets may be linked to the wallet application such that when a payment is initiated in the wallet application, at least one of the first plurality of applets may be accessed via the processor 106 to complete the payment. In an embodiment, the first secure application S1 may include cryptographic credentials (*e*.*g*., digital signatures, digital certificates, or the like). The cryptographic credentials may be used to ensure the authenticity and integrity of the first secure application S1. The processor 106 may be further configured to establish a secure channel (not shown) with the detector 110. The secure channel may be established to protect the cryptographic credentials. The detector 110 may be configured to authorize the installation of the first secure application S1 by verifying the digital signature or the digital certificate. The control circuit 118 may install the first secure application S1 in the secure memory 112.

The control circuit 118 may be configured to determine the status of the reboot flag RFL associated with at least one of the plurality of host applications H1-Hm stored in the host memory 108 of the host 102 based on the installation of the first secure application S1. The control circuit 118 may be further configured to determine the successful installation of the first secure application S1. Further, the control circuit 118 may be configured to transmit a confirmation signal (not shown) to the processor 106. Based on the confirmation signal, the processor 106 may be notified about the successful installation of the first secure application S1.

The host 102 may undergo the reset operation. The detector 110 may receive the reset alert signal RS (*e.g.,* the pad supply signal PSS or the secure GPIO signal SGS) from the processor 106. Further, the detector 110 may detect the reboot state of the processor 106 when the state of the reset alert signal RS toggles and determine that the host 102 underwent the reset operation. Further, the detector 110 may set the reboot flag RFL that indicates the reboot state of the processor 106 and store the reboot flag RFL in the secure memory 112.

At least one of the plurality of host applications H1-Hm may generate the access request AR by way of the processor 106 to access at least one of the plurality of secure functions associated with the first secure application S1. The processor 106 may transmit the access request AR to the control circuit 118. The control circuit 118 may generate the status request SR based on the received access request AR. Further, the control circuit 118 may transmit the status request SR to the detector 110.

The secure memory 112 may provide the authorization state AS from the secure memory 112 based on the status request SR. Further, the control circuit 118 may determine that the authorization state AS is indicative of an authorization before the reset operation and the authorization state AS of each of the plurality of the host applications H1-Hm is indicative of the successful authorization before the reset operation. The secure memory 112 may provide the reboot flag RFL associated with at least one of the plurality of host applications H1-Hm to the control circuit 118 based on the status request SR. Based on the reboot flag RFL, the control circuit 118 may determine that the processor 106 underwent the reset operation. Additionally, the reboot flag RFL associated with at least one of the plurality of host applications H1-Hm may be reset by the secure memory 112 once retrieved by the control circuit 118.

The control circuit 118 may update the authorization state AS associated with at least one of the plurality of host applications H1-Hm to the first state to indicate the absence of the authorization after the host 102 underwent the reset operation. Further, the control circuit 118 may restrict the access of at least one of the plurality of host applications H1-Hm to at least one of the plurality of secure functions associated with the first secure application S1. The processor 106 may initiate the authorization with the control circuit 118. When the authorization between the control circuit 118 and the processor 106 is successful, the control circuit 118 circuit may update the authorization state AS to the second state. Further based on the authorization state AS being at the second state, the control circuit 118 may grant at least one of the plurality of host applications H1-Hm access to the plurality of secure functions and the plurality of general-purpose functions. When the authorization between the control circuit 118 and the processor 106 is a failure, the control circuit 118 circuit may update the authorization state AS to the first state. Further based on the authorization state AS being at the first state, the control circuit 118 may restrict access to the plurality of host applications H1-Hm to the plurality of secure functions.

FIGS. 2A-2B illustrate the reboot database 114 stored in the secure memory 112, in accordance with an embodiment of the present disclosure.

Referring now to FIG. 2A, the reboot database 114 includes a column 200. The column 200 may correspond to a plurality of reference addresses 202-210 of the reboot database 114. Each of the plurality of reference addresses 202-210 may be associated with a storage of the reboot flag RFL corresponding to a host application of the plurality of host applications H1-Hm. The plurality of host applications may include a first host application H1, a second host application H2, ....., and an Mth host application Hm. In an example, a first reference address 202 of the plurality of reference addresses 202-210 may store the reboot flag RFL (*e.g.,* the reboot flag RFL is set to '1') associated with the first host application H1 before the generation of the access request AR corresponding to the first host application H1. Similarly, the reboot flag RFL of each of the second host application H2 and the Mth host application Hm may be set to '1'. Examples of the reboot database 114 may include relational database, extensible markup language (XML) database, in-memory database, blockchain database, or the like.

Referring now to FIG. 2B, the column 200 corresponds to the reboot flag RFL indicating the reboot state of the processor 106. In an exemplary embodiment, the Mth host application Hm may be configured to generate the access request AR to access at least one of the plurality of secure applications S1-Sn stored in the secure memory 112. Further, the processor 106 may transmit the access request AR to the control circuit 118. The control circuit 118 may receive the access request AR from the processor 106. The control circuit 118 may generate the status request SR based on the received access request AR. Further, the control circuit 118 may be configured to transmit the status request SR to the detector 110. Based on the status request SR, the secure memory 112 may provide the reboot flag RFL associated with the Mth host application Hm. Additionally, the reboot flag RFL associated with the Mth host application Hm may be reset by the secure memory 112 once retrieved by the control circuit 118 (*e.g.,* the reboot flag RFL is set to "0"). Further, the reboot flag RFL associated with each of the second host application H2 and the first host application H1 continues to remain at '1'.

Although FIG. 2B describes the Mth host application Hm generates the access request AR to access at least one of the plurality of secure applications S1-Sn stored in the secure memory 112, the scope of the present disclosure is not limited to it. In various other embodiments, different or multiple host applications may generate the access request AR to access at least one of the plurality of secure applications S1-Sn stored in the secure memory 112, without deviating from the scope of the present disclosure.

FIG. 3 illustrates the authorization database 116 stored in the secure memory 112, in accordance with an embodiment of the present disclosure.

The authorization database 116 includes a column 300. The column 300 may correspond to a plurality of reference addresses 302-310 of the authorization database 116. Each of the plurality of reference addresses 302-310 may be associated with a storage of the authorization state AS corresponding to a host application of the plurality of host applications H1-Hm. In an example, a first reference address 302 of the plurality of reference addresses 302-310 may store the authorization state AS as the first state (*e.g.,* the authorization state AS is set to 'FS') associated with the first host application H1 before the generation of the access request AR corresponding to the first host application H1. Similarly, the authorization state AS of each of the second host application H2 and the Mth host application Hm may be set to the first state. Examples of the authorization database 116 may include relational database, extensible markup language (XML) database, in-memory database, blockchain database, or the like. In another embodiment, the first reference address 302 may store the authorization state AS as the first state (*e.g.,* the authorization state AS is set to 'FS') associated with the first host application H1 and the second host application H2 before the generation of the access request AR corresponding to at least one of the first host application H1 and the second host application H2. Similarly, the authorization state AS of the Mth host application Hm may be set to the first state.

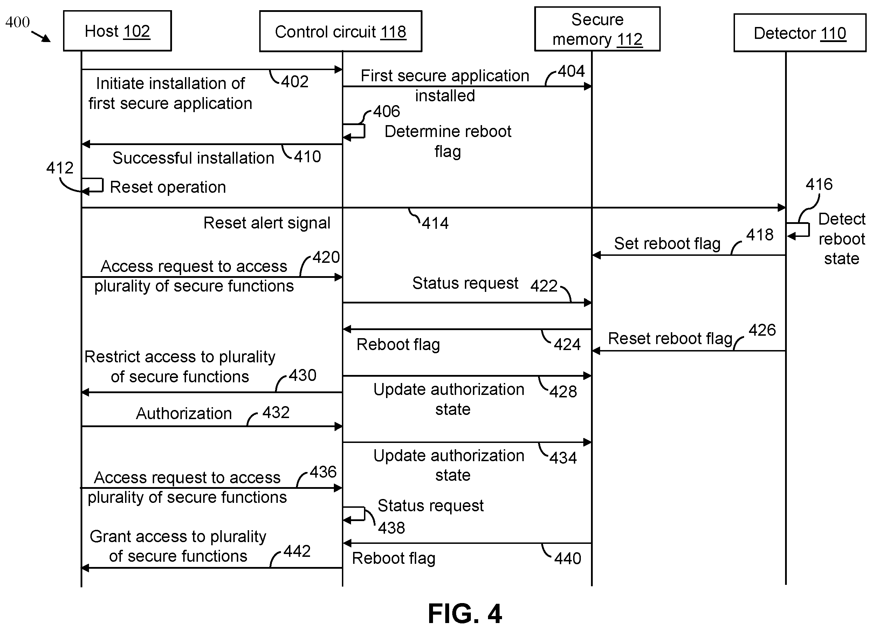

FIG. 4 represents a process flow diagram 400 that illustrates the access regulation of the host 102 to the plurality of secure functions, in accordance with an embodiment of the present disclosure. For the sake of brevity and without deviating from the scope of disclosure, it is assumed that the host 102 generates the access request to access the first secure application S1.

The installation of the first secure application S1 is initiated by the processor 106 of the host 102 (as shown by arrow 402). The first secure application is installed in the secure memory 112 by the control circuit 118 (as shown by arrow 404). The control circuit 118 may determine the status of the reboot flag RFL associated with at least one of the plurality of host applications H1-Hm stored in the host memory 108 of the host 102 (as shown by arrow 406). Based on the successful installation of the first secure application S1, the control circuit 118 may transmit the confirmation signal to the host 102 indicative of the successful installation of the first secure application (as shown by arrow 410).

The processor 106 may execute the reset operation of the host 102 (as shown by arrow 412). During the reset operation, the processor 106 may toggle the state of the reset alert signal RS and transmit the reset alert signal RS to the detector 110 (as shown by arrow 414). Further, the detector 110 may detect the reboot state of the host 102 when the state of the reset alert signal RS toggles (as shown by arrow 416). In an embodiment, the detector 110 may set the reboot flag RFL (*e.g.,* set the reboot flag RFL to one) when the reboot state is indicative of the reset operation (as shown by arrow 418).

At least one of the plurality of host applications H1-Hm stored in the host memory 108 may generate the access request AR to access at least one of the plurality of secure functions associated with the first secure application S1 stored in the secure memory 112. The host 102 may transmit the access request AR to the control circuit 118 (as shown by arrow 420). The status request SR to determine the reboot flag RFL associated with at least one of the plurality of host applications H1-Hm is generated by the control circuit 118 (as shown by arrow 422). Based on the status request SR, the reboot flag RFL indicative of the reset operation is received by the control circuit 118 (as shown by arrow 424). The detector 110 may reset the reboot flag RFL (*e.g.,* the reboot flag RFL = '0') when the control circuit 118 receives the reboot flag RFL (as shown by arrow 426). The authorization state AS associated with at least one of the plurality of host applications H1-Hm is updated to the first state based on the status of the reboot flag RFL that indicates the reset operation (as shown by arrow 428). The control circuit 118 may restrict the access of at least one of the plurality of host applications H1-Hm to the plurality of secure functions (as shown by arrow 430). The authorization between host 102 and the control circuit 118 is initiated by the processor 106 after the reset operation (as shown by arrow 432). For the sake of brevity and without deviating from the scope of the disclosure, it is assumed that the authorization is successful. Further, the host 102 may transmit the access request AR to the control circuit 118 after the authorization between the host 102 and the control circuit 118. Based on the successful authorization between the host 102 and the control circuit 118, the authorization state AS may be updated from the first state to the second state (as shown by arrow 434). The control circuit 118 may grant the host 102 access to the plurality of secure functions (as shown by arrow 436). The status request SR to determine the reboot flag RFL associated with at least one of the plurality of host applications H1-Hm may be generated by the control circuit 118 (as shown by arrow 438). Based on the status request SR, the reboot flag RFL indicative of the normal operation of the host 102 may be received by the control circuit 118 (as shown by arrow 440). The control circuit 118 may grant the access of at least one of the plurality of host applications H1-Hm to the plurality of secure functions (as shown by arrow 442).

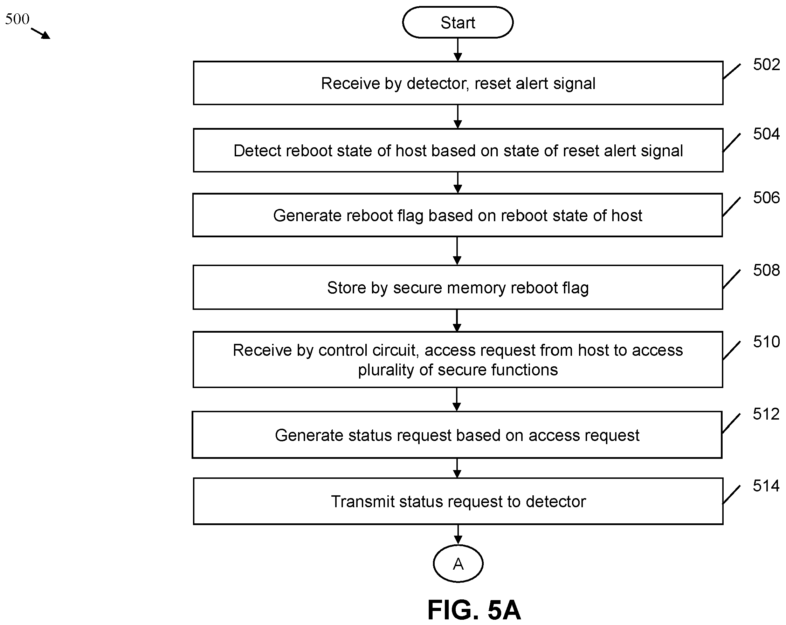

FIGS. 5A-5C, collectively, represents a flowchart 500 that illustrates an access regulating method for regulating access to secure functions, in accordance with an embodiment of the present disclosure.

Referring now to FIG. 5A, at step 502, the detector 110 may receive the reset alert signal RS transmitted by the host 102 (*e.g.,* the processor 106). The reset alert signal RS may include at least one of the secure GPIO signal SGS and the pad supply signal PSS. At step 504, the detector 110 may detect the reboot state of the host 102 when the state of the reset alert signal RS toggles. At step 506, the detector 110 may generate the reboot flag RFL (*e.g.,* set the reboot flag RFL or reset the reboot flag RFL) based on the reboot state of the host 102. For example, the detector 110 may set the reboot flag RFL as one when the reboot state is indicative of the reset operation. At step 508, the secure memory 112 may store the reboot flag RFL associated with each of the plurality of host applications H1-Hm stored in the host 102 (*e*.*g*., the host memory 108). The secure memory 112 may store the reboot flag RFL in the reboot database 114. At step 510, the control circuit 118 may receive the access request AR from the host 102 to access at least one of the plurality of secure functions associated with the plurality of secure applications S1-Sn stored in the secure memory 112. At step 512, the control circuit 118 may generate the status request SR based on the received access request AR. At step 514, the control circuit 118 may transmit the status request SR to the detector 110.

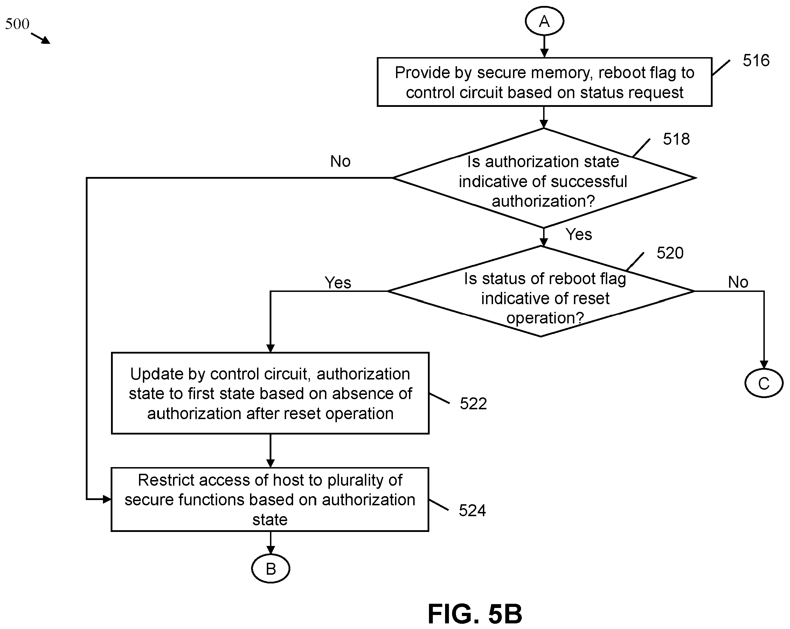

Referring now to FIG. 5B, at step 516, the secure memory 112 may provide the reboot flag RFL to the control circuit 118 based on the access request AR transmitted to the detector 110. At step 518, it is determined whether the authorization state AS is indicative of the successful authorization between the host 102 and the control circuit 118. If at step 518, it is determined that the authorization state AS is indicative of the successful authorization (*e*.*g*., before the reset operation), step 520 is performed. At step 520, it is determined whether the status of the reboot flag RFL is indicative of the reset operation. If at step 520, it is determined that the status of the reboot flag RFL is indicative of the reset operation, step 522 is performed. At step 522, the control circuit 118 may update the authorization state AS to the first state such that the first state may indicate the absence of the authorization. If at step 518, it is determined that the authorization state AS is not indicative of the successful authorization (*e*.*g*., before the reset operation), step 524 is performed.

At step 524, the control circuit 118 may restrict the access to the plurality of secure functions based on the authorization state AS. The control circuit 118 may grant the access to the plurality of general-purpose functions. Further, the host 102 may initiate the authorization after the reset operation of the host 102.

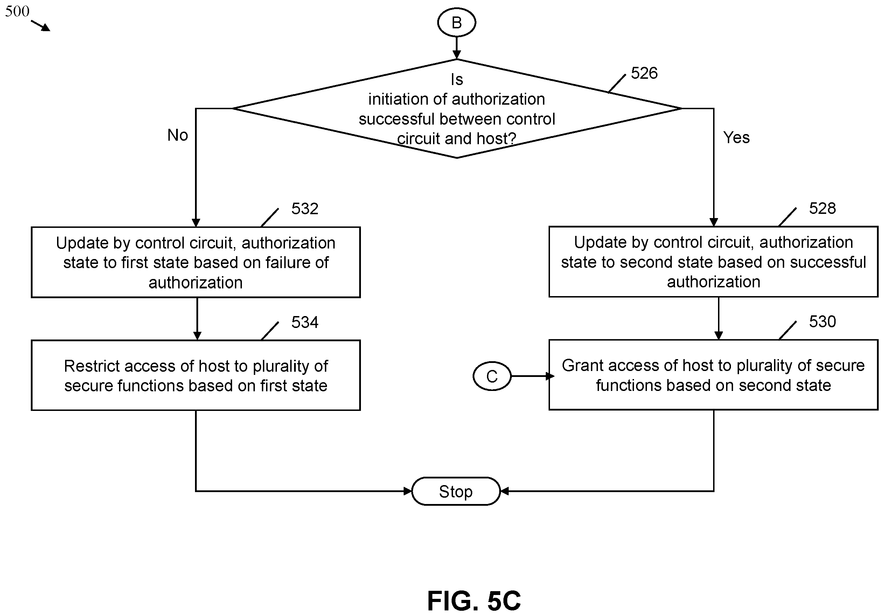

Referring now to FIG. 5C, at step 526, it is determined whether the initiation of the authorization between the control circuit 118 and the host 102 is successful. If at step 526, it is determined that the authorization between the control circuit 118 and the host 102 is successful after the reset operation, step 528 is performed. At step 528, the control circuit 118 may update the authorization state AS to the second state such that the second state may indicate the successful authorization between the control circuit 118 and the host 102 after the reset operation of the host 102. If at step 520, it is determined that the status of the reboot flag RFL is not indicative of the reset operation, step 530 is performed. At step 530, the control circuit 118 may grant the host 102 access to the plurality of secure functions and the plurality of general-purpose functions. If at step 526, it is determined that the authorization between the control circuit 118 and the host 102 has failed after the reset operation, step 532 is performed. At step 532, the control circuit 118 may update the authorization state AS to the first state such that the first state may indicate the failure of the authorization. At step 534, the control circuit 118 may restrict the access to the plurality of secure functions.

The authorization database 116 may store the authorization state AS persistently in the secure memory 112. Further, the detector 110 and the control circuit 118 add an extra security layer to the electronic device 100. The detector 110 may detect the reboot state of the host 102 based on the state of the reset alert signal RS. In the event of an attack by a malicious software that gains control of the host 102, the control circuit 118 restricts access to such software based on the determination of failure or absence of the authorization after the reset operation of the host 102. On initiation of the authorization, a failure of the authorization may occur due to the control of the host 102 by the malicious software. Thus, the malicious software is unable to access secure functions of the electronic device 100 and a safety of the electronic device 100 is improved. When genuine applications of the host 102 may generate the access request AR by way of the processor 106 to access the plurality of secure applications S1-Sn, the authorization between the control circuit 118 and the host 102 serves as a deterministic factor to grant access to the host 102 to the plurality of secure applications S1-Sn after the reset operation of the host 102. When the authorization between the host 102 and the control circuit 118 after the reset operation of the host 102 is successful, the control circuit 118 may grant access to the plurality of secure functions to at least one of the plurality of host applications H1-Hm. Similarly, the authorization may occur for remote IoT devices that may control secure operations remotely to ensure the security of the underlying secure operations.

In an embodiment, an integrated circuit (IC) may comprise a detector coupled to a host, wherein the detector may be configured to receive a reset alert signal from the host. Further, the detector may be configured to detect a reboot state of the host based on a state of the reset alert signal, wherein the state of the reset alert signal toggles during a reset operation of the host. The detector may be further configured to generate a reboot flag based on the reboot state of the host. A control circuit of the IC may be coupled to the detector and the host, wherein the control circuit may be configured to receive an access request from the host to access a plurality of secure functions of the IC. The control circuit may be further configured to determine upon receiving the access request, a status of the reboot flag and an authorization state of the host. Further, the control circuit may be configured to regulate based on the status of the reboot flag and the authorization state, access of the host to the plurality of secure functions.

In some embodiments, the IC may further comprise a secure memory coupled to the detector and the control circuit, wherein the secure memory may be configured to store the reboot flag. The secure memory may be further configured to provide based on the access request, the reboot flag to the control circuit.

In some embodiments, the control circuit may be further configured to generate based on the access request received from the host, a status request. Further, the control circuit may be configured to transmit the status request to the detector, wherein the control circuit may receive the reboot flag from the secure memory based on the transmission of the status request to the detector.

In some embodiments, when the control circuit may determine that the authorization state is associated with a successful authorization between the control circuit and the host before the reset operation of the host and the status of the reboot flag may be indicative of the reset operation of the host, the control circuit may be further configured to update the authorization state to indicate absence of an authorization between the control circuit and the host after the reset operation, and wherein when the authorization state is updated to indicate the absence of the authorization, the control circuit may be further configured to restrict the access of the host to the plurality of secure functions, thereby regulating the access of the host.

In some embodiments, when the control circuit may restrict the access of the host to the plurality of secure functions, the authorization between the host and the control circuit may be initiated by the host.

In some embodiments, when the authorization between the control circuit and the host may be successful based on the initiation of the authorization after the reset operation of the host, the control circuit may be further configured to update the authorization state to indicate a successful authorization between the control circuit and the host after the reset operation of the host. When the authorization state indicates the successful authorization after the reset operation, the control circuit may be further configured to grant the host access to the plurality of secure functions, thereby regulating the access of the host.

In some embodiments, when the authorization between the control circuit and the host may be a failure upon the initiation of the authorization after the reset operation of the host, the control circuit may restrict the access of the host to the plurality of secure functions.

In some embodiments, the secure memory may be further configured to store a plurality of secure applications, wherein each of the plurality of secure applications may be associated with at least one of the plurality of secure functions.

In some embodiments, the plurality of secure functions may be one of a group consisting of device authorization, payment processing, identity verification, secure messaging, cryptographic operation, access control, digital signature, and tokenization.

In some embodiments, the authorization state may be associated with an authorization between the host and the control circuit, wherein the authorization may be indicative of at least one of a group consisting of trusted binding, multi-factor authorization, token-based authorization, certificate-based authorization, blockchain-based authorization, and behavioral-based authorization.

In some embodiments, the reset alert signal may include at least one of a plurality of secure general-purpose input/output (GPIO) signals and a pad supply signal.

In some embodiments, a state of the pad supply signal may be one of (i) asserted when the host remains ON, and (ii) de-asserted when the host remains OFF during the reset operation, wherein the detector may be further configured to generate the reboot flag based on the de-assertion of the pad supply signal.

In some embodiments, a state of the secure GPIO signal may be asserted during the reset operation, wherein the detector may be further configured to generate the reboot flag based on the assertion of the secure GPIO signal.

In some embodiments, the detector may be further configured to transition from a low power mode to a normal mode upon receiving the reset alert signal, wherein during the normal mode, the detector may generate the reboot flag indicative of the reboot state of the host, and wherein during the low power mode, the detector may be further configured to operate in a low energy consumption state.

In another embodiment, an access regulating method may comprise receiving a reset alert signal by a detector of an integrated circuit (IC) from a host. The method may comprise detecting, by the detector, a reboot state of the host based on the reset alert signal, wherein a state of the reset alert signal may toggle during a reset operation of the host. The method may comprise generating, by the detector, a reboot flag based on the reboot state of the host. Further, the method may comprise receiving, by a control circuit of the IC, an access request from the host to access a plurality of secure functions of the IC. The method may comprise determining, by the control circuit, upon receiving the access request, a status of the reboot flag and an authorization state between the host and the control circuit. Additionally, the method may comprise regulating, by the control circuit, based on the status of the reboot flag and the authorization state, access of the host to the plurality of secure functions.

In some embodiments, the method may further comprise storing, by a secure memory of the IC, the reboot flag, and providing, by the secure memory, based on the access request, the reboot flag to the control circuit.

In some embodiments, the method may further comprise generating, by the control circuit, based on the access request received from the host, a status request that may be indicative of detecting the reboot state of the host. The method may further comprise transmitting, by the control circuit, the status request to the detector, wherein the reboot flag may be received by the control circuit from the secure memory based on the transmission of the status request to the detector.

In some embodiments, the method may further comprise updating, by the control circuit, upon determining that the authorization state may indicate a successful authorization between the control circuit and the host before the reset operation of the host, and the status of the reboot flag may be indicative of the reset operation of the host, the authorization state to indicate absence of an authorization between the control circuit and the host after the reset operation of the host. The method may further comprise restricting, by the control circuit, when the authorization state may be updated to indicate the absence of the authorization between the control circuit and the host after the reset operation of the host, the access of the host to the plurality of secure functions, thereby regulating the access of the host.

In some embodiments, when the access of the host to the plurality of secure functions is restricted, the authorization between the host and the control circuit may be initiated after the reset operation of the host.

In some embodiments, the method may further comprise updating, by the control circuit, upon the authorization between the control circuit and the host being successful after the reset operation of the host, the authorization state to indicate a successful authorization between the control circuit and the host after the reset operation of the host. The method may further comprise granting, by the control circuit, when the authorization state may indicate the successful authorization after the reset operation, the access of the host to the plurality of secure functions, thereby regulating the access of the host.

In the present disclosure, the term "assert" is used to mean placing a signal in an active state. For example, for an active-low signal, the signal is at a logic-low state when asserted, and for an active-high signal, the signal is at a logic-high state when asserted.

## Claims

1. An integrated circuit, IC, (104) comprising:
a detector (110) coupled to a host (102), wherein the detector is configured to:
receive a reset alert signal from the host (102);
detect a reboot state of the host (102) based on a state of the reset alert signal, wherein the state of the reset alert signal toggles during a reset operation of the host; and
generate a reboot flag based on the reboot state of the host; and
a control circuit (118) coupled to the detector (110) and the host (102), wherein the control circuit is configured to:
receive an access request from the host (102) to access a plurality of secure functions of the IC (104);
determine, upon receiving the access request, a status of the reboot flag and an authorization state of the host (102); and
regulate, based on the status of the reboot flag and the authorization state, access of the host (102) to the plurality of secure functions.

2. The IC of claim 1, further comprising a secure memory (112) coupled to the detector and the control circuit, wherein the secure memory is configured to:
store the reboot flag; and
provide, based on the access request, the reboot flag to the control circuit.

3. The IC of claim 2, wherein the control circuit is further configured to:
generate, based on the access request received from the host, a status request; and
transmit the status request to the detector, wherein the control circuit receives the reboot flag from the secure memory based on the transmission of the status request to the detector.

4. The IC of claim 3,
wherein when the control circuit determines that the authorization state is associated with a successful authorization between the control circuit and the host before the reset operation of the host and the status of the reboot flag is indicative of the reset operation of the host, the control circuit is further configured to update the authorization state to indicate absence of an authorization between the control circuit and the host after the reset operation of the host, and
wherein when the authorization state is updated to indicate the absence of the authorization, the control circuit is further configured to restrict the access of the host to the plurality of secure functions, thereby regulating the access of the host.

5. The IC of claim 4,
wherein when the control circuit restricts the access of the host to the plurality of secure functions, the authorization between the host and the control circuit is initiated by the host.

6. The IC of claim 5,
wherein when the authorization between the control circuit and the host is successful based on the initiation of the authorization after the reset operation of the host, the control circuit is further configured to update the authorization state to indicate a successful authorization between the control circuit and the host after the reset operation of the host, and
wherein when the authorization state indicates the successful authorization after the reset operation, the control circuit is further configured to grant the host access to the plurality of secure functions, thereby regulating the access of the host.

7. The IC of claim 5 or 6,
wherein when the authorization between the control circuit and the host is a failure upon the initiation of the authorization after the reset operation of the host, the control circuit restricts the access of the host to the plurality of secure functions.

8. The IC of any one of claims 2 to 7, wherein the secure memory is further configured to store a plurality of secure applications, and wherein each of the plurality of secure applications is associated with at least one of the plurality of secure functions.

9. The IC of any preceding claim, wherein the plurality of secure functions is one of a group consisting of device authorization, payment processing, identity verification, secure messaging, cryptographic operation, access control, digital signature, and tokenization.

10. The IC of any preceding claim, wherein the authorization state is associated with an authorization between the host and the control circuit, and wherein the authorization is indicative of at least one of a group consisting of trusted binding, multi-factor authorization, token-based authorization, certificate-based authorization, blockchain-based authorization, and behavioral-based authorization.

11. The IC of any preceding claim, wherein the reset alert signal includes at least one of a secure general-purpose input/output, GPIO, signal and a pad supply signal.

12. The IC of claim 11, wherein the reset alert signal includes a pad supply signal, wherein a state of the pad supply signal is one of (i) asserted when the host remains ON, and (ii) de-asserted when the host remains OFF during the reset operation, and wherein the detector is further configured to generate the reboot flag based on the de-assertion of the pad supply signal.

13. The IC of claim 11 or 12, wherein the reset alert signal includes a secure GPIO signal, wherein a state of the secure GPIO signal is asserted during the reset operation, and wherein the detector is further configured to generate the reboot flag based on the assertion of the secure GPIO signal.

14. The IC of any preceding claim, wherein the detector is further configured to transition from a low power mode to a normal mode upon receiving the reset alert signal, wherein during the normal mode, the detector generates the reboot flag indicative of the reboot state of the host, and wherein during the low power mode, the detector is further configured to operate in a low energy consumption state.

15. An access regulating method (500) comprising:
receiving (502) a reset alert signal by a detector of an integrated circuit, IC, from a host;
detecting (504), by the detector, a reboot state of the host based on the reset alert signal wherein a state of the reset alert signal toggles during a reset operation of the host;
generating, by the detector, a reboot flag based on the reboot state of the host;
receiving (510), by a control circuit of the IC, an access request from the host to access a plurality of secure functions of the IC;
determining (518, 520), by the control circuit, upon receiving the access request, a status of the reboot flag and an authorization state between the host and the control circuit; and regulating (522, 524, 526, 528, 530, 532, 534), by the control circuit, based on the status of the reboot flag and the authorization state, access of the host to the plurality of secure functions.

## Patentansprüche

1. Integrierte Schaltung, IC, (104), umfassend:
einen Detektor (110), der mit einem Host (102) gekoppelt ist, wobei der Detektor zu Folgendem konfiguriert ist:
Empfangen eines Rücksetzwarnsignals von dem Host (102);
Detektieren eines Neustartzustands des Hosts (102) basierend auf einem Zustand des Rücksetzwarnsignals, wobei
der Zustand des Rücksetzwarnsignals während eines Rücksetzvorgangs des Hosts umschaltet; und
Erzeugen einer Neustartkennzeichnung basierend auf dem Neustartzustand des Hosts; und
eine Steuerschaltung (118), die mit dem Detektor (110) und dem Host (102) gekoppelt ist, wobei die Steuerschaltung zu Folgendem konfiguriert ist:
Empfangen einer Zugriffsanforderung von dem Host (102) zum Zugreifen auf mehrere sichere Funktionen der IC (104);
Bestimmen, bei Empfangen der Zugriffsanforderung, eines Status der Neustartkennzeichnung und eines Autorisierungszustands des Hosts (102); und
Regeln, basierend auf dem Status der Neustartkennzeichnung und dem Autorisierungszustand, des Zugriffs des Hosts (102) auf die mehreren sicheren Funktionen.

2. IC nach Anspruch 1, ferner umfassend einen sicheren Speicher (112), der mit dem Detektor und der Steuerschaltung gekoppelt ist, wobei der sichere Speicher zu Folgendem konfiguriert ist:
Speichern der Neustartkennzeichnung; und
Bereitstellen, basierend auf der Zugriffsanforderung, der Neustartkennzeichnung an die Steuerschaltung.

3. IC nach Anspruch 2, wobei die Steuerschaltung ferner zu Folgendem konfiguriert ist:
Erzeugen, basierend auf der von dem Host empfangenen Zugriffsanforderung, einer Statusanforderung; und
Übertragen der Statusanforderung an den Detektor, wobei basierend auf der Übertragung der Statusanforderung an den Detektor die Steuerschaltung die Neustartkennzeichnung von dem sicheren Speicher empfängt.

4. IC nach Anspruch 3,
wobei, wenn die Steuerschaltung bestimmt, dass der Autorisierungszustand mit einer erfolgreichen Autorisierung zwischen der Steuerschaltung und dem Host vor dem Rücksetzvorgang des Hosts assoziiert ist, und der Status der Neustartkennzeichnung den Rücksetzvorgang des Hosts anzeigt, die Steuerschaltung ferner dazu konfiguriert ist, den Autorisierungszustand zu aktualisieren, um ein Fehlen einer Autorisierung zwischen der Steuerschaltung und dem Host nach dem Rücksetzvorgang des Hosts anzuzeigen, und
wobei, wenn der Autorisierungszustand aktualisiert wird, um das Fehlen der Autorisierung anzuzeigen, die Steuerschaltung ferner dazu konfiguriert ist, den Zugriff des Hosts auf die mehreren sicheren Funktionen zu beschränken, wodurch der Zugriff des Hosts geregelt wird.

5. IC nach Anspruch 4,
wobei, wenn die Steuerschaltung den Zugriff des Hosts auf die mehreren sicheren Funktionen beschränkt, die Autorisierung zwischen dem Host und der Steuerschaltung durch den Host initiiert wird.

6. IC nach Anspruch 5,
wobei, wenn die Autorisierung zwischen der Steuerschaltung und dem Host basierend auf der Initiierung der Autorisierung nach dem Rücksetzvorgang des Hosts erfolgreich ist, die Steuerschaltung ferner dazu konfiguriert ist, den Autorisierungszustand zu aktualisieren, um eine erfolgreiche Autorisierung zwischen der Steuerschaltung und dem Host nach dem Rücksetzvorgang des Hosts anzuzeigen, und
wobei, wenn der Autorisierungszustand die erfolgreiche Autorisierung nach dem Rücksetzvorgang anzeigt, die Steuerschaltung ferner dazu konfiguriert ist, dem Host Zugriff auf die mehreren sicheren Funktionen zu gewähren, wodurch der Zugriff des Hosts geregelt wird.

7. IC nach Anspruch 5 oder 6,
wobei, wenn die Autorisierung zwischen der Steuerschaltung und dem Host bei der Initiierung der Autorisierung nach dem Rücksetzvorgang des Hosts fehlschlägt, die Steuerschaltung den Zugriff des Hosts auf die mehreren sicheren Funktionen beschränkt.

8. IC nach einem der Ansprüche 2 bis 7, wobei der sichere Speicher ferner dazu konfiguriert ist, mehrere sichere Anwendungen zu speichern, und wobei jede der mehreren sicheren Anwendungen mit mindestens einer der mehreren sicheren Funktionen assoziiert ist.

9. IC nach einem der vorhergehenden Ansprüche, wobei die mehreren sicheren Funktionen eine aus einer Gruppe ist, die aus Vorrichtungsautorisierung, Zahlungsverarbeitung, Identitätsfeststellung, sicherer Nachrichtenübermittlung, kryptographischem Vorgang, Zugriffssteuerung, digitaler Signatur und Tokenisierung besteht.

10. IC nach einem der vorhergehenden Ansprüche, wobei der Autorisierungszustand mit einer Autorisierung zwischen dem Host und der Steuerschaltung assoziiert ist, und wobei die Autorisierung mindestens eines aus einer Gruppe anzeigt, die aus vertrauenswürdiger Bindung, Multifaktorautorisierung, tokenbasierter Autorisierung, zertifikatbasierter Autorisierung, blockchainbasierter Autorisierung und verhaltensbasierter Autorisierung besteht.

11. IC nach einem der vorhergehenden Ansprüche, wobei das Rücksetzwarnsignal mindestens eines eines sicheren universellen Eingabe-/Ausgabe-, GPIO-, Signals und eines Pad-Versorgungssignals beinhaltet.

12. IC nach Anspruch 11, wobei das Rücksetzwarnsignal ein Pad-Versorgungssignal beinhaltet, wobei ein Zustand des Pad-Versorgungssignals eines von (i) festgelegt ist, wenn der Host eingeschaltet bleibt, oder (ii) nicht festgelegt ist, wenn der Host während des Rücksetzvorgangs ausgeschaltet bleibt, und wobei der Detektor ferner dazu konfiguriert ist, die Neustartkennzeichnung basierend auf der Nicht-Festlegung des Pad-Versorgungssignals zu erzeugen.

13. IC nach Anspruch 11 oder 12, wobei das Rücksetzwarnsignal ein sicheres GPIO-Signal beinhaltet, wobei ein Zustand des sicheren GPIO-Signals während des Rücksetzvorgangs festgelegt wird, und wobei der Detektor ferner dazu konfiguriert ist, die Neustartkennzeichnung basierend auf der Festlegung des sicheren GPIO-Signals zu erzeugen.

14. IC nach einem der vorhergehenden Ansprüche, wobei der Detektor ferner dazu konfiguriert ist, bei Empfangen des Rücksetzwarnsignals von einem Niederleistungsmodus in einen Normalmodus überzugehen, wobei während des Normalmodus der Detektor die Neustartkennzeichnung erzeugt, die den Neustartzustand des Hosts anzeigt, und wobei während des Niederleistungsmodus der Detektor ferner dazu konfiguriert ist, in einem niedrigen Energieverbrauchszustand zu arbeiten.

15. Zugriffsregelungsverfahren (500), umfassend:
Empfangen (502) eines Rücksetzwarnsignals durch einen Detektor einer integrierten Schaltung, IC, von einem Host;
Detektieren (504), durch den Detektor, eines Neustartzustands des Hosts basierend auf dem Rücksetzwarnsignal, wobei ein Zustand des Rücksetzwarnsignals während eines Rücksetzvorgangs des Hosts umschaltet;
Erzeugen, durch den Detektor, einer Neustartkennzeichnung basierend auf dem Neustartzustand des Hosts;
Empfangen (510), durch eine Steuerschaltung der IC, einer Zugriffsanforderung von dem Host zum Zugreifen auf mehrere sichere Funktionen der IC;
Bestimmen (518, 520), durch die Steuerschaltung, nach Empfangen der Zugriffsanforderung, eines Status der Neustartkennzeichnung und eines Autorisierungszustands zwischen dem Host und der Steuerschaltung; und
Regeln (522, 524, 526, 528, 530, 532, 534), durch die Steuerschaltung, basierend auf dem Status der Neustartkennzeichnung und dem Autorisierungszustand, eines Zugriffs des Hosts auf die mehreren sicheren Funktionen.

## Revendications

1. Circuit intégré, CI,(104), comprenant :
un détecteur (110) couplé à un hôte (102), le détecteur étant configuré pour :
recevoir un signal d'alerte de réinitialisation en provenance de l'hôte (102) ;
détecter un état de redémarrage de l'hôte (102) sur la base d'un état du signal d'alerte de réinitialisation, où
l'état du signal d'alerte de réinitialisation bascule pendant une opération de réinitialisation de l'hôte ; et
générer un indicateur de redémarrage sur la base de l'état de redémarrage de l'hôte ; et
un circuit de commande (118) couplé au détecteur (110) et à l'hôte (102), le circuit de commande étant configuré pour :
recevoir une demande d'accès en provenance de l'hôte (102) pour accéder à une pluralité de fonctions sécurisées du CI (104) ;
déterminer, lors de la réception de la demande d'accès, un état de l'indicateur de redémarrage et un état d'autorisation de l'hôte (102) ; et
réguler, sur la base de l'état de l'indicateur de redémarrage et de l'état d'autorisation, l'accès de l'hôte (102) à la pluralité de fonctions sécurisées.

2. CI selon la revendication 1, comprenant en outre une mémoire sécurisée (112) couplée au détecteur et au circuit de commande, dans lequel la mémoire sécurisée est configurée pour :
stocker l'indicateur de redémarrage ; et
fournir, sur la base de la demande d'accès, l'indicateur de redémarrage au circuit de commande.

3. CI selon la revendication 2, dans lequel le circuit de commande est en outre configuré pour :
générer, sur la base de la demande d'accès reçue de l'hôte, une demande d'état ; et
transmettre la demande d'état au détecteur, le circuit de commande recevant l'indicateur de redémarrage en provenance de la mémoire sécurisée sur la base de la transmission de la demande d'état au détecteur.

4. CI selon la revendication 3,
dans lequel, lorsque le circuit de commande détermine que l'état d'autorisation est associé à une autorisation réussie entre le circuit de commande et l'hôte avant l'opération de réinitialisation de l'hôte et que l'état de l'indicateur de redémarrage indique l'opération de réinitialisation de l'hôte, le circuit de commande est en outre configuré pour mettre à jour l'état d'autorisation pour indiquer l'absence d'une autorisation entre le circuit de commande et l'hôte après l'opération de réinitialisation de l'hôte, et
dans lequel, lorsque l'état d'autorisation est mis à jour pour indiquer l'absence de l'autorisation, le circuit de commande est en outre configuré pour restreindre l'accès de l'hôte à la pluralité de fonctions sécurisées, régulant ainsi l'accès de l'hôte.

5. CI selon la revendication 4,
dans lequel, lorsque le circuit de commande restreint l'accès de l'hôte à la pluralité de fonctions sécurisées, l'autorisation entre l'hôte et le circuit de commande est initiée par l'hôte.

6. CI selon la revendication 5,
dans lequel, lorsque l'autorisation entre le circuit de commande et l'hôte est réussie sur la base de l'initiation de l'autorisation après l'opération de réinitialisation de l'hôte, le circuit de commande est en outre configuré pour mettre à jour l'état d'autorisation afin d'indiquer une autorisation réussie entre le circuit de commande et l'hôte après l'opération de réinitialisation de l'hôte, et
dans lequel, lorsque l'état d'autorisation indique l'autorisation réussie après l'opération de réinitialisation, le circuit de commande est en outre configuré pour accorder à l'hôte l'accès à la pluralité de fonctions sécurisées, régulant ainsi l'accès de l'hôte.

7. CI selon la revendication 5 ou 6,
dans lequel, lorsque l'autorisation entre le circuit de commande et l'hôte est un échec lors de l'initiation de l'autorisation après l'opération de réinitialisation de l'hôte, le circuit de commande restreint l'accès de l'hôte à la pluralité de fonctions sécurisées.

8. CI selon l'une quelconque des revendications 2 à 7, dans lequel la mémoire sécurisée est en outre configurée pour stocker une pluralité d'applications sécurisées, et dans lequel chacune de la pluralité d'applications sécurisées est associée à au moins l'une de la pluralité de fonctions sécurisées.

9. CI selon l'une quelconque des revendications précédentes, dans lequel la pluralité de fonctions sécurisées est l'une d'un groupe constitué d'une autorisation de dispositif, d'un traitement de paiement, d'une vérification d'identité, d'une messagerie sécurisée, d'une opération cryptographique, d'un contrôle d'accès, d'une signature numérique et d'une tokenisation.

10. CI selon l'une quelconque des revendications précédentes, dans lequel l'état d'autorisation est associé à une autorisation entre l'hôte et le circuit de commande, et dans lequel l'autorisation indique au moins un élément d'un groupe constitué d'une liaison sécurisée, d'une autorisation multifactorielle, d'une autorisation basée sur un jeton, d'une autorisation basée sur un certificat, d'une autorisation basée sur une chaîne de blocs et l'autorisation basée sur le comportement.

11. CI selon l'une quelconque des revendications précédentes, dans lequel le signal d'alerte de réinitialisation comprend au moins l'un d'un signal d'entrée/sortie universel sécurisé, GPIO, et d'un signal d'alimentation de plot.

12. CI selon la revendication 11, dans lequel le signal d'alerte de réinitialisation inclut un signal d'alimentation de plot, dans lequel un état du signal d'alimentation de plot est l'un de (i) activé lorsque l'hôte reste ALLUMÉ, et (ii) désactivé lorsque l'hôte reste ÉTEINT pendant l'opération de réinitialisation, et dans lequel le détecteur est en outre configuré pour générer l'indicateur de redémarrage sur la base de la désactivation du signal d'alimentation de plot.

13. CI selon la revendication 11 ou 12, dans lequel le signal d'alerte de réinitialisation inclut un signal GPIO sécurisé, dans lequel un état du signal GPIO sécurisé est activé pendant l'opération de réinitialisation, et dans lequel le détecteur est en outre configuré pour générer l'indicateur de redémarrage sur la base de l'activation du signal GPIO sécurisé.

14. CI selon l'une quelconque des revendications précédentes, dans lequel le détecteur est en outre configuré pour passer d'un mode de faible puissance à un mode normal lors de la réception du signal d'alerte de réinitialisation, où, pendant le mode normal, le détecteur génère l'indicateur de redémarrage indiquant l'état de redémarrage de l'hôte, et, pendant le mode de faible puissance, le détecteur est en outre configuré pour fonctionner dans un état de faible consommation d'énergie.

15. Procédé de régulation d'accès (500) comprenant :
la réception (502) d'un signal d'alerte de réinitialisation par un détecteur d'un circuit intégré, CI, en provenance d'un hôte ;
la détection (504), par le détecteur, d'un état de redémarrage de l'hôte sur la base du signal d'alerte de réinitialisation dans lequel un état du signal d'alerte de réinitialisation bascule pendant une opération de réinitialisation de l'hôte ;
la génération, par le détecteur, d'un indicateur de redémarrage sur la base de l'état de redémarrage de l'hôte ;
la réception (510), par un circuit de commande du CI, d'une demande d'accès en provenance de l'hôte pour accéder à une pluralité de fonctions sécurisées du CI ;
la détermination (518, 520), par le circuit de commande, lors de la réception de la demande d'accès, d'un état de l'indicateur de redémarrage et d'un état d'autorisation entre l'hôte et le circuit de commande ; et
la régulation (522, 524, 526, 528, 530, 532, 534), par le circuit de commande, sur la base de l'état de l'indicateur de redémarrage et de l'état d'autorisation, de l'accès de l'hôte à la pluralité de fonctions sécurisées.
